**Europäisches Patentamt**

**European Patent Office**

**Office européen des brevets**

(19)

(11) Veröffentlichungsnummer: **0 307 581 B1**

(12) # EUROPÄISCHE PATENTSCHRIFT

(45) Veröffentlichungstag der Patentschrift: **16.10.91**

(51) Int. Cl.⁵: **G21C 19/30**, G21F 9/02

(21) Anmeldenummer: **88111539.8**

(22) Anmeldetag: **18.07.88**

(54) **Adsorptionseinrichtung zur Gastrennung.**

(30) Priorität: **03.09.87 DE 3729517**

(43) Veröffentlichungstag der Anmeldung:
**22.03.89 Patentblatt 89/12**

(45) Bekanntmachung des Hinweises auf die
Patenterteilung:
**16.10.91 Patentblatt 91/42**

(84) Benannte Vertragsstaaten:
**DE FR GB**

(56) Entgegenhaltungen:
**DE-A- 2 655 936**
**GB-A- 2 118 761**

**KERNTECHNIK, Band 16, Nr. 12, 1974, Seiten
528-532; H. STECHEMESSER et al.: "Ein Spaltgasseparator mit geschlossenem Stickstoff-
Kreislauf"**

**BBC-NACHRICHTEN, Band 53, Nr. 1/2,
Januar/Februar 1971, Seiten 32-36; K. MAN-
HART et al.: "Aufgabe und Auslegung der
Gasreinigungsanlage des Thorium-
Hochtemperatur-Reaktors"**

(73) Patentinhaber: **SIEMENS AKTIENGESELL-
SCHAFT**
**Wittelsbacherplatz 2**
**W-8000 München 2(DE)**

(72) Erfinder: **Eckardt, Bernd, Dipl.-Ing.**
**Kastanienweg 14**
**W-6454 Bruchköbel(DE)**
Erfinder: **Burbach, Thomas, Dipl.-Ing.**
**Auestrasse 45**
**W-6057 Dietzenbach(DE)**

## Beschreibung

Die Erfindung betrifft eine Adsorptionseinrichtung zur Gastrennung mit einem Adsorbens, vorzugsweise Aktivkohle, zwecks Adsorption von insbesondere radioaktivem Krypton und/oder Xenon, wobei das Adsorbens enthaltende Rohre in einem wärmeisolierten Behälter vertikal verlaufend angeordnet und mit einer benachbarten Heizeinrichtung und mit einem Kühlmittel versehen sind. Die Adsorptionseinrichtung soll ferner für die Behandlung von Kohlendioxid und/oder Stickoxiden und gegebenenfalls für die Abscheidung von Feuchte geeignet sein, wobei vorzugsweise Zeolithe als Adsorbens eingesetzt werden.

Bei der aus der DE-PS 32 14 825 bekannten Adsorptionseinrichtung, mit der Krypton mittels Aktivkohle abgetrennt werden soll, ist sowohl die für die Adsorption gewünschte Kühlung als auch die Beheizung des Adsorbers, die zum Austreiben des angelagerten Kryptons benötigt wird, deswegen unzufriedenstellend, weil die Temperaturverteilung weitgehend inhomogen ist. Dies führt zu Wärmespannungen und deshalb zu ständigen Wechselbeanspruchungen, weil die Gastrennung mit Hilfe einer Adsorptionseinrichtung einen ständigen Wechsel von Kühlung und Aufheizung erfordert.

Bei dem Spaltgasseparator nach der Zeitschrift "Kerntechnik" 1974, Heft 12, S. 528 - 532 ist der Behälter mit dem als Kühlmittel dienenden flüssigen Stickstoff gefüllt, so daß die am Behälterdeckel hängenden Absorberpatronen, Rohrheizer, Niveaufühler usw. umspült werden. Zum Desorbieren sollen mit dem Rohrheizer zunächst der Stickstoff verdampft und dann die Aktivkohlefallen durch Wärmestrahlung auf 300 °C erwärmt werden. Dies ist sehr energieaufwendig und auch in apparativer Hinsicht nicht einfach. Schnelle Wechsel von Adsorption und Desorption sind praktisch nicht möglich.

Die Erfindung geht von der Aufgabe aus, eine Adsorptionseinrichtung zu schaffen, die mit geringem apparativen Aufwand eine gleichmäßige Temperaturverteilung erreicht, so daß geringe Temperaturspannungen häufige Betriebswechsel erlauben und die auch in wenigen Exemplaren großtechnisch gut einzusetzen ist.

Erfindungsgemäß ist vorgesehen, daß das Kühlmittel in einer Rohranordnung enthalten ist, die sich neben den Adsorberrohren über annähernd deren ganze Länge erstreckt, und daß in dem Behälter eine Gasumwälzeinrichtung angeordnet ist, deren Gasstrom die Heizeinrichtung, die Kühlrohre und die gesamte Länge der Adsorberrohre erfaßt.

Bei der Erfindung sind sowohl die Kühlungsals auch die Heizungseinrichtung als einzelne Komponenten auf die Adsorberrohre ausgerichtet und damit in einem Behälter integriert. Mit dieser Ausführung wird die Einhaltung einer praktisch gleichen Temperatur längs der Adsorberrohre bei gleichzeitig sehr geringer Temperaturdifferenz quer zum Adsorberrohrbündel ermöglicht. Der Wärmeaustausch zwischen den Adsorberrohren und Kühlung oder Heizeinrichtung wird durch umlaufendes Gas, vorzugsweise durch Helium, so intensiviert, daß eine homogene Temperaturverteilung und zudem eine erhebliche Reduzierung des Energiebedarfs erreicht wird. Vorzugsweise beträgt die Gasumwälzrate 100 h$^{-1}$ oder mehr.

Parallel zum vertikal verlaufenden Rohrbündel der Absorberrohre kann die konzentrische Rohrschlange der Kühleinrichtung vertikal orientiert werden, während sich die Heizeinrichtung über nur einen Teil der Höhe von Rohrbündel und Rohrschlange zu erstrecken braucht. In dem restlichen Raum kann vorteilhaft ein Ventilator angeordnet sein. Mit diesem wird der Gasumlauf angetrieben, so daß ein schneller Wärmeübergang erreicht wird.

Der Ventilator wird in Strömungsrichtung nach den Beheizungs-und Kühlungselementen angeordnet, so daß neben der Gasförderung gleichzeitig eine thermische Vergleichmäßigung des umlaufenden Gasstromes vor dessen Eintritt in das Adsorberrohrbündel erreicht und eine Ausbildung von Strähnen unterschiedlicher Temperatur sicher vermieden wird.

Weiterhin sollte der Druckverlust im Gasumwälzbereich so gewählt werden, daß sich über das Adsorberrohrbündel ein vielfacher Druckverlust von z.B. Faktor 2 oder mehr gegenüber dem Druckverlust des restlichen Strömungsweges ergibt. Hierdurch wird eine weitgehend gleichmäßige Anströmgeschwindigkeit des Adsorberrohrbündels erreicht und somit werden unterschiedliche thermische Werkstoffbeanspruchung als auch Sorptionsunterschiede im Adsorber vermieden.

Der Antriebsmotor des Ventilators kann vorteilhaft außerhalb des Behälters angeordnet sein, so daß er bei normalen Temperaturen arbeitet. Seine Verlustwärme muß dann nicht über die Kühleinrichtung abgeführt werden. Dabei kann der Antriebsmotor mit einer gasdichten Kapsel umgeben sein, die gleichzeitig als Kühlmantel dient und an dem Behälter angeflanscht ist. Dies vermeidet Leckverluste längs der Welle, die durch die Behälterwand zu führen ist.

Eine besonders vorteilhafte Ausbildung der erfindungsgemäßen Adsorptionseinrichtung besteht darin, daß Rohrbündel, Rohrschlange und Heizeinrichtung miteinander verbunden und als Einheit in den Behälter eingehängt sind. Der Behälter ist am oberen Ende vorteilhaft mit einer Öffnung gleichen Querschnitts wie der Innenraum versehen und mit einem Flanschdeckel verschlossen. Durch diese Öffnung kann die Einheit als Ganzes eingesetzt und bei Bedarf wieder herausgehoben werden. Durch die Integration aller notwendigen Funktionselemente in einem Behältnis ergeben sich als besonderer Vorteil vergleichsweise geringe Druckverluste, so daß mit geringem Energieeinsatz hohe temperaturvergleichmäßigende Gasumwälzraten von z.B. 1000 $h^{-1}$ oder mehr gefahren werden können.

Die erfindungsgemäße Adsorptionseinrichtung kann wegen ihrer vorteilhaften Bauweise und der damit verbundenen Einsparungen zu verschiedenen Zwecken vorteilhaft eingesetzt werden. Besonders günstig ist jedoch die Verwendung in einer Anlage mit mindestens zwei parallelen Zweigen, wobei eine Adsorptionseinrichtung als Adsorber arbeitet, während die andere regeneriert wird. Bei dieser Verwendung kann man einen kontinuierlichen Betrieb fahren, obwohl jede der Adsorptionseinrichtungen stufenweise arbeitet. Außerdem kann dabei durch eine Verschiebung der in den Adsorptionseinrichtungen gespeicherten Energie (Wärme-/Kältemenge) von einem Zweig zum anderen parallel angeordnetem Zweig mittels eines Verbundgaskreislaufs (Heliumverbundkreislaufs) eine rekuperative Energieausnutzung erfolgen. Dadurch kann der Energiebedarf um ca. 30 - 50 % reduziert werden. Solche Anwendungen finden sich besonders in der Kerntechnik, z.B. bei der Wiederaufarbeitung von Kernbrennstoffen, bei der Krypton und/oder Xenonnuklide aus einem Gasgemisch abgetrennt und gesondert gelagert werden sollen. Entsprechend kann eine vorteilhafte Anwendung aber auch bei der Reinigung und/oder Trocknung eines Gasgemisches durch Adsorption von Stickoxiden, Kohlendioxid und Feuchte erfolgen.

Zur näheren Erläuterung der Erfindung wird anhand der Zeichnung ein Ausführungsbeispiel beschrieben. Dabei zeigt

FIG 1 eine Adsorptionseinrichtung nach der Erfindung mit einem kreisringförmig ausgebildeten Adsorberrohrbündel in einem Längsschnitt,

FIG 2 die Verwendung von zwei Adsorptionseinrichtungen in einer kontinuierlich arbeitenden Anlage zur Abtrennung von Edelgasen,

FIG 3 die Verwendung der Adsorptionseinrichtung in einer kontinuierlich arbeitenden Anlage zur Rückhaltung von Stickoxiden und Feuchte,

FIG 4 eine Adsorptionseinrichtung nach der Erfindung mit einem nicht kreisringförmig ausgebildeten Adsorberrohrbündel in einem Längsschnitt,

FIG 5 einen Querschnitt zu der Adsorptionseinrichtung nach FIG 4 mit abgewandelten Adsorberrohren und

FIG 6 eine Adsorptionseinrichtung nach der Erfindung, bei der das Wärmeträgergas das Adsorberbündel in Längs- und Querrichtung durchströmt.

Die erfindungsgemäße Adsorptionseinrichtung 1 umfaßt einen Behälter 2 mit einer metallischen Außenwand 3 und einer Wärmeisolierung 4, die als Feststoffisolation oder aber als Vakuumisolation ausgeführt sein kann. Der Behälter 2 hat z.B. einen Durchmesser von 2 m und eine Höhe von 3 m. Die Oberseite ist als Deckel 6 ausgebildet, der mit einer Flanschverbindung 7 befestigt ist. Wie man sieht, hat die mit den Deckel verschlossene Öffnung den gleichen Querschnitt wie der Innenraum 8 des Behälters 2.

Unterhalb des Deckels 6 ragen Anker 10 von dem Deckel 6 in den Innenraum 8. An den Ankern 10 ist eine Adsorbereinheit gehaltert, die als Ganzes mit 11 bezeichnet ist und ein Rohrbündel 12, eine Kühleinrichtung 9 mit einer Heizeinrichtung 14 umfaßt.

Das Rohrbündel 12 besteht aus einer Vielzahl von vertikal angeordneten Rohren 16, die parallel zueinander auf der Fläche eines Kreisringes angeordnet sind. Der Innendurchmesser des Ringes beträgt z.B. 1 m. Oben und unten sind die Rohre 16 in Rohrböden 17 und 18 gefaßt, auf denen aufgewölbte Blechringe 19 und 20 zur Bildung von Sammelkammern 21 und 22 befestigt sind. Die Rohre 16 haben einen Durchmesser von z.B. 35 mm und enthalten Aktivkohle mit einer Schüttdichte von 0,45 kg/l. Sie sind so eng gruppiert, daß der Abstand zwischen den Rohren 16 kleiner als der Rohrdurchmesser ist.

Die Kühleinrichtung 9 umfaßt eine Rohrschlange 13 im Inneren des Rohrbündels 12. Diese kann einlagig zylindrisch ausgebildet sein. Ihre Enden sind über Zuleitungen 25 und Ableitungen 26 mit einem äußeren Anschluß 27 und 28 verbunden, der aus dem Behälter 2 geführt ist. Der Anschluß 28 führt zu einer nicht weiter dargestellten Kältemaschine, mit der Flüssigstickstoff als Sekundärkühlmittel zur Erzeugung einer Temperatur von weniger als minus 130 $^\circ$C im Behälterinneren 8 geführt werden kann. Das Rohr 29 der Rohrschlange hat einen Durchmesser von z.B. 20 mm. In der gleichen Größe liegt der Abstand zwischen der Rohrschlange 13 und dem Innendurchmesser des Rohrbündels 12.

Die Heizung 14 ist im Zentrum des Behälterinneren 8 und damit auch im Inneren von Rohrbündel 12 und Rohrschlange 13 angeordnet. Sie umfaßt elektrische Heizstäbe 30, die sich parallel zueinander von einer unteren Tragplatte 31 vertikal nach oben erstrecken. Die Tragplatte 31 kann mit dem unteren Rohrboden 18 des Rohrbündels 11 aus einem Stück bestehen. Sie hält die Heizstäbe, die z.B. kreisringförmig mit einem Abstand von der Heizstabdicke im Inneren der Rohrschlangen 13 gruppiert sind.

Die Höhe der Heizstäbe 30 ist kleiner als die Höhe des Rohrbündels 12 und der Rohrschlange 13. Deshalb verbleibt im Inneren ein Raum 35, in dem ein Ventilator 36 angeordnet ist. Der Ventilator kann auch oberhalb des Rohrbündels unter dem Behälterdeckel angeordnet sein. Der Ventilator 36 sitzt mit einer sternförmigen Halterung 37 in einem Mantel 38. Die Halterung 37 ist mit einer Antriebswelle 39 oben durch den Behälter 2 geführt zu einem Antriebsmotor 40, der außerhalb des Behälters 2 auf dem Deckel 6 befestigt ist. Der Motor 40 ist mit einer gasdichten Kapsel 41 umschlossen, die auf dem Deckel 6 mit einer Flanschverbindung 42 gasdicht befestigt ist. Diese Kapsel ist zur Abfuhr der Motorabwärme als doppelwandiger Kühlmantel 43 ausgeführt mit einem Kühlmitteleinlaß 43 a und einem Kühlmittelauslaß 43 b.

Der Innenraum 8 des Behälters 2 enthält Helium unter einem Druck von z.B. 1 bar. Das Helium dient als Wärmeübertragungsmittel, das mit dem Ventilator 36 in Richtung der Pfeile 44 durch das Behälterinnere 8 umgewälzt wird. Bei der Umwälzung passiert das Helium das Rohrbündel 12 und wird entweder mit der Rohrschlange 13 gekühlt oder mit der Heizeinrichtung 14 aufgeheizt. Die Umwälzrate beträgt $1000 \text{ h}^{-1}$ oder mehr.

Mit der Kühlung wird die Anlagerung der Edelgase Krypton und Xenon an die Aktivkohle in den Rohren 16 des Rohrbündels 12 verstärkt, wenn eine zu reinigende Gasmischung über Anschlüsse 46 und 47 in das Rohrbündel 12 geführt wird. Das gereinigte Gas wird durch einen Gasaustritt 50 und 51 abgezogen, der hinter bzw. vor der Bildebene liegt. Nach der Anlagerung können dann Krypton und Xenon durch Beheizen der Aktivkohle mit Hilfe der Heizeinrichtung 14 ausgetrieben werden, deren Wärme ebenfalls mit dem Ventilator auf die Rohre 16 übertragen wird.

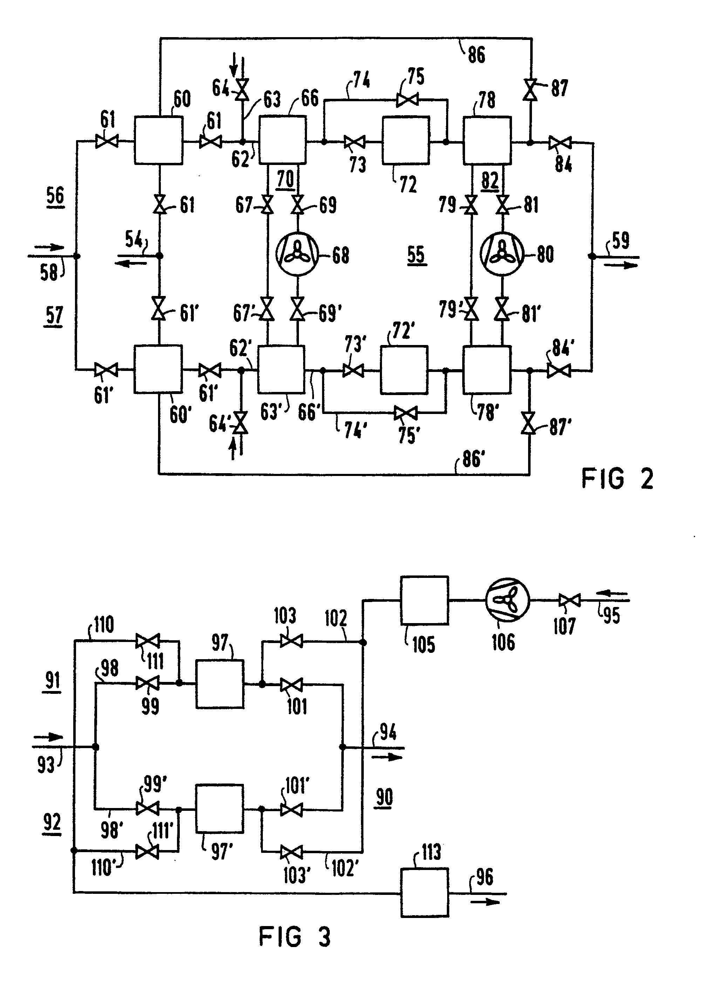

In FIG 2 ist eine Adsorptionsanlage 55 für einen quasi-kontinuierlichen Betrieb zur Abtrennung von Xenon und Krypton aus Spaltgasen dargestellt, die bei der Brennelementaufarbeitung anfallen. Die Anlage 55 umfaßt zwei gleiche Stränge 56 und 57, die parallel zueinander an einen Einlaß 58 für die zu reinigenden Gase und einen Auslaß 59 für die Edelgase angeschlossen sind, während bei 54 der Auslaß der gereinigten Gase vorgesehen ist.

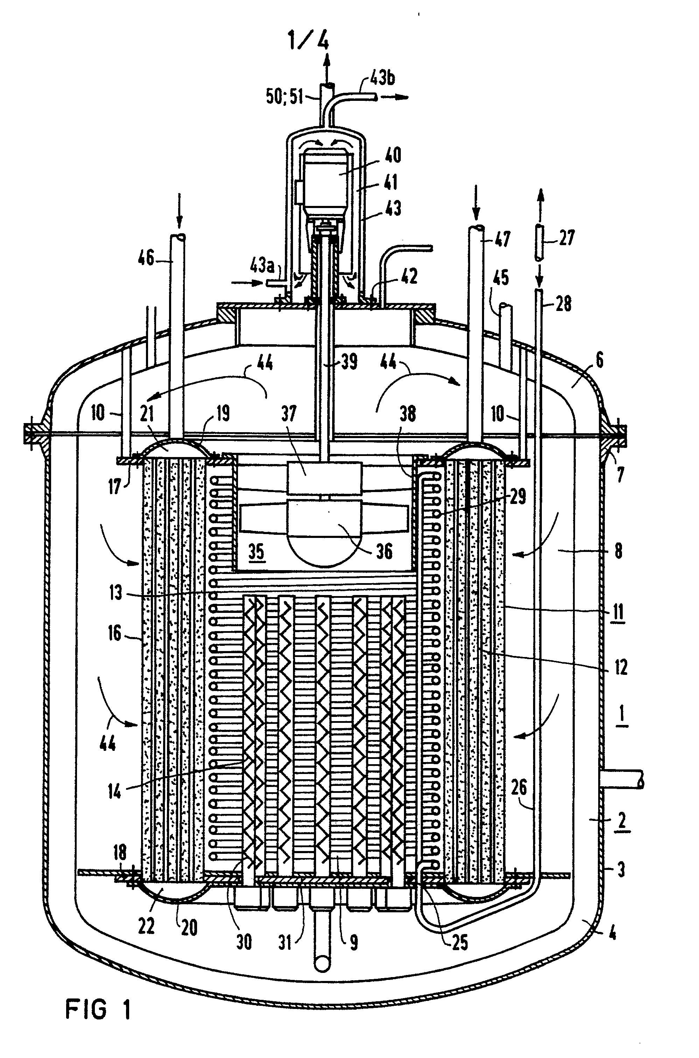

Jeder der beiden Stränge 56, 57 ist gleich ausgebildet und umfaßt einen Vorkühler 60, 60', der durch Ventile 61, 61' abzutrennen ist. Eine Leitung 62, 62', die mit einem Einlaß 63, 63' für ein Trägergas versehen ist und ein Ventil 64, 64' aufweist, führt zu einer Adsorptionseinrichtung 66, 66', die wie die Adsorptionseinrichtung 1 nach FIG 1 ausgeführt ist. Die Adsorptionseinrichtungen 66, 66' sind über Ventile 67, 67' miteinander unmittelbar verbunden. Ferner besteht eine Verbindung über einen Ventilator 68, der durch Ventile 69 abgesperrt werden kann. Mit einer entsprechenden Steuerung und Regelung der Anlage 55 kann über einen Kreis 70 somit ein gegenläufiger Heiz-Kühl-Betrieb und Wärmeaustausch zwischen den Adsorptionseinrichtungen 66, 66' erfolgen.

Den Adsorptionseinrichtungen 66, 66' ist ein Zwischenkühler 72, 72' nachgeschaltet, der über ein Ventil 73, 73' absperrbar ist und der mit einer Umgehungsleitung 74, 74' mit einem Ventil 75, 75' überbrückt ist.

Hinter dem Zwischenkühler 72, 72' liegt eine zweite Adsorptionseinrichtung 78, 78'. Zwischen den Adsorptionseinrichtungen 78, 78' ist über Ventile 79, 79' und einen Ventilator 80 mit vor- und nachgeschalteten Ventilen 81, 81' im Kreis 82 geschlossen, mit dem ein Wärmeaustausch zwischen den Adsorptionseinrichtungen 78, 78' gefahren werden kann.

Am Ende ist jeder Strang 56, 57 über ein Ventil 84, 84' absperrbar. Vor diesem zweigt eine Umgehungsleitung 86, 86' mit einem Ventil 87, 87' ab, die zu dem Vorkühler 60, 60' führt. Mit der Leitung 86 wird das in dem als Adsorber arbeitenden Strang (hier 56) gereinigte Gas zum Auslaß 54 geführt.

Gleichzeitig wird der Strang 57 regeneriert. Bei laufender Heizung in den Adsorptionseinrichtungen 66, 78' werden diese mit Spülgas, z.B. Helium, beaufschlagt, das in den Einlaß 63' eingespeist wird. Das Spülgas durchströmt die Adsorptionseinrichtungen 66, 78', wobei der Zwischenkühler 72' über die Leitung 74' umgangen wird. Mit dem Spülgas werden dann die Edelgase über den Auslaß 59 ausgetragen.

In FIG 3 ist eine Adsorptionsanlage 90 für quasi-kontinuierlichen Betrieb zur Abtrennung von Feuchte und Stickoxiden aus dem Auflöser- oder Zellenabgas dargestellt, das bei der Brennelementaufarbeitung anfällt. Die Anlage 90 kann als vorgeschaltetes Adsorptionssystem mit einer nach FIG 2 ausgeführten Adsorptionsanlage 55 zur Edelgastrennung verbunden sein, oder auch in geschlossenem Kreislaufbetrieb zur Reinigung der zellenatmosphäre eingesetzt werden.

Die Anlage umfaßt zwei gleiche Stränge 91 und 92, die parallel zueinander an einem Einlaß 93 für das zu reinigende Gasgemisch und einem Auslaß 94 für die gereinigten Gase angeschlossen sind, während bei 95 der Einlaß für das zur Regeneration verwendete Spülgas und bei 96 der Auslaß des Spülgases vorgesehen sind. Der Auslaß 94 ist gegebenenfalls mit dem Einlaß 58 der Adsorptionsanlage 55 nach FIG 2 verbunden.

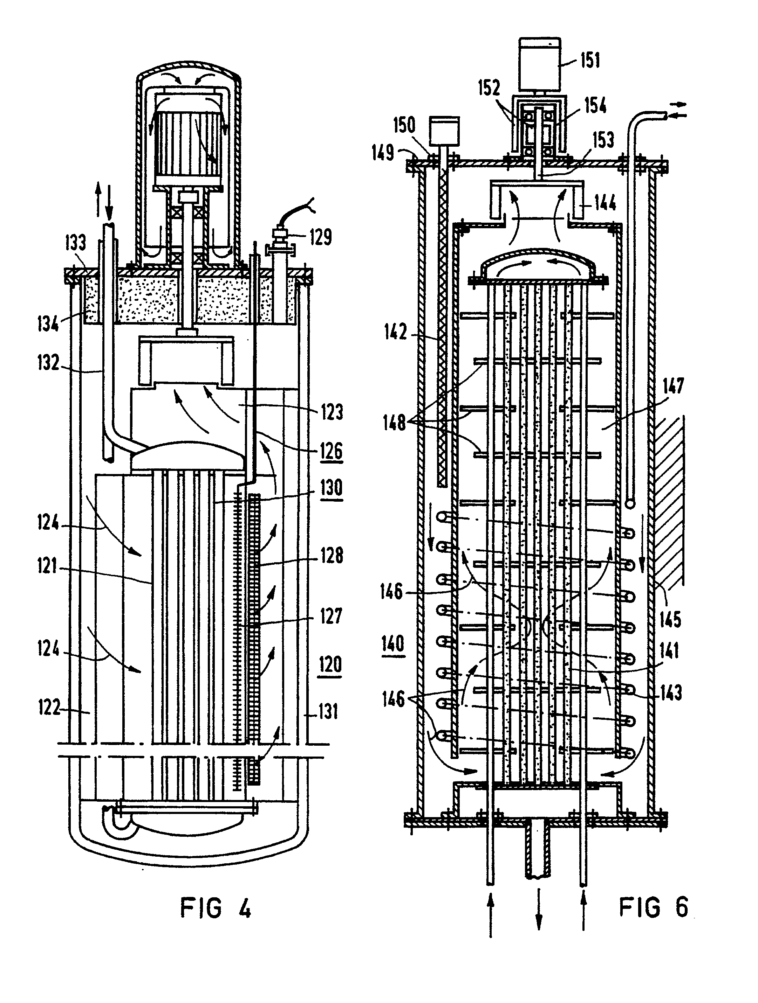

Die Stränge 91, 92 sind identisch ausgebildet und umfassen jeweils eine Adsorptionseinrichtung 97, 97', die in ihrer Ausführung der Adsorptionseinrichtung 1 nach FIG 1 oder der später beschriebenen Adsorptionseinrichtung nach FIG 4 entspricht. Als Adsorbens werden hierbei Zeolithe eingesetzt.

Vom Einlaß 93 führt eine Leitung 98, 98' über ein Ventil 99, 99' zu der Adsorptionseinrichtung 97, 97' und von dort über ein Ventil 101, 101' zum Auslaß 94. Ferner ist die Adsorptionseinrichtung 97, 97' über eine Leitung 102, 102', die ein Ventil 103, 103' aufweist, mit einer Beheizungseinrichtung 105 verbunden. Der Beheizungseinrichtung 105 ist ein Ventilator 106 vorgeschaltet, der durch ein Ventil 107 abgesperrt werden kann und mit dem Spülgaseinlaß 95 verbunden ist. Über eine Leitung 110, 110' mit einem Ventil 111, 111' besteht eine Verbindung mit einem Kühler 113 und dem dahinterliegenden Spülgasauslaß 96.

Während ein Strang (hier 91) in adsorptivem Gasreinigungsbetrieb arbeitet, sind die Ventile 99 und 101 geöffnet und das Gas durchströmt den Adsorptionsstrang vom Einlaß 93 zum Auslaß 94. Die dabei freiwerdende Adsorptionswärme wird über die in der Adsorptionseinrichtung 97 integrierten Kühleinrichtung 9 nach FIG 1 abgeführt und die Adsorberfüllung so auf einer bestimmten bestimmten Temperatur von z.B. 10 °C gehalten. Die Ventile 103 und 111 sind dabei geschlossen. Gleichzeitig wird der Parallelstrang 92 regeneriert. Hierzu wird die Adsorptionseinrichtung 97' mittels dem Ventilator 106 und der Heizeinrichtung 105 bei geöffnetem Ventil 103' und 107 mit Spülgas beaufschlagt, das am Einlaß 95 entnommen wird. Die Adsorptionseinrichtung 97' wird dabei mit der Beheizungseinrichtung 14 nach FIG 1 auf eine Regenerationstemperatur von z.B. 250 °C erwärmt. Nach dem Verlassen der Adsorptionseinrichtung 97' wird das Spülgas über das geöffnete Ventil 111' und Leitung 110' zum Kühler 113 geführt und danach über den Auslaß 96 zusammen mit nach dem Kühler noch vorhandenen Feuchte und Stickoxiden ausgetragen.

Der Auslaß 96 kann mit der Adsorptionsanlage 90 vorgeschalteten Prozeßeinheiten verbunden sein, in die die desorbierten Stickoxide recycliert werden.

Besonders vorteilhaft kann der Spülgaseinlaß 95 mit dem Auslaß 54 der Adsorptionsanlage 55 nach FIG 2 verbunden werden und so die Spülgasversorgung der Adsorptionsanlage 90 mit Reingas aus der Adsorptionsanlage 55 nach FIG 2 erfolgen.

In FIG 4 ist eine Adsorptionseinrichtung 120 dargestellt, bei der abweichend von der Adsorptionseinrichtung gemäß FIG 1 das Rohrbündel 121 nicht kreisringförmig ausgebildet ist. Die Geometrie des Rohrbündels 121 ist als quadratischer oder rechteckiger Ausschnitt des Bündels nach FIG 1 ausgeführt. Zur Führung des im Behälterinnenraum 122 umgewählten Wärmeträgergases ist eine Leitvorrichtung 123 vorgesehen, die eine horizontale Anströmung des Rohrbündels 121 in Richtung der Pfeile 124 gewährleistet.

Das umgewälzte Wärmeträgermedium wird hier mit einer Kühlvorrichtung 126 gekühlt, die

aus in vertikaler Richtung parallel zum Adsorberrohrbündel 121 verlaufenden Wärmeaustauscherrohren aus Rippenrohr 127 besteht, die ein Kühlmittel führen. Alternativ wird es mit der elektrischen Heizeinrichtung 128 aufgeheizt, deren Anschlußleitungen mit einer Durchführung 129 herausgeführt sind.

Das Adsorberrohrbündel 121 ist wiederum zusammen mit den Heiz- und Kühleinrichtungen 127, 128 und der Leitvorrichtung 123 als Einheit 130 in den Behälter 131 eingehängt. Die Einheit 130 wird über Anker sowie über die Gaszu- und -abführleitungen 132 gehaltert, die am Behälterdeckel 133 befestigt sind.

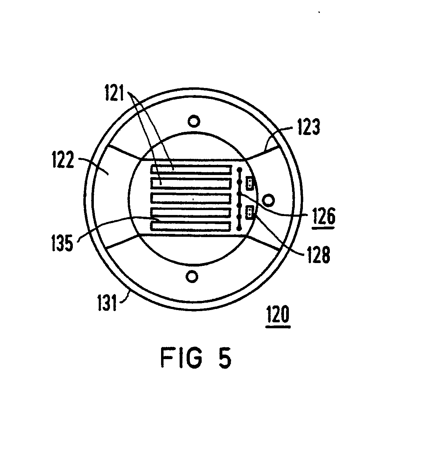

Der Adsorberbehälter 131 ist als doppelwandiger vakuumisolierter Behälter ausgeführt, der Behälterdeckel 133 ist mit einer pulverförmigen mineralischen Isolierung 134 gefüllt. Die Adsorptionseinrichtung 120 ist insbesondere zur Reinigung von Gasgemischen bei kleinen bis mittleren Volumenströmen von z.B. 50 m³/h vorteilhaft anwendbar. Sind zur Reinigung größerer Volumenströme größere Adsorbermengen erforderlich, so kann das Adsorbens statt in zylindrischen Rohren in Rohren 135 mit einem Rechteckquerschnitt untergebracht werden, wie in dem Querschnitt in FIG 5 dargestellt ist. Dabei sind mehrere Rohre 135 mit ihrer Längsrichtung parallel zur Gasströmung nebeneinander angeordnet. Sie werden über ihre gesamte Länge an den Längsseiten besprüht, bevor der Gasstrom auf die Kühleinrichtung 126 und die Heizeinrichtung 128 trifft.

FIG 6 zeigt als weitere Ausführung eine Adsorptionseinrichtung 140 wiederum mit den Vorteilen der Integration aller Funktionselemente wie Adsorberrohrbündel 141, Heizeinrichtung 142, Kühleinrichtung 143 und Gasumwälzeinrichtung 144 innerhalb eines wärmeisolierten Behälters 145.

Das Wärmeträgermedium, z.B. Helium oder Stickstoff, wird in Richtung der Pfeile 146 im Behälterinnenraum 147 mittels des Ventilators 144 umgewälzt und durchströmt dabei das Adsorberrohrbündel 141 unter der Wirkung von Umlenkblechen 148. Die Kühleinrichtung 143 ist als konzentrisch um das Rohrbündel geführte Rohrschlange vorgesehen. Die Heizeinrichtung 142 ist in Form von elektrischen Heizstäben von außen durch den Behälterdeckel 149 durchgeführt und an diesem mit Flanschen 150 befestigt.

Die Antriebseinheit 151 des Ventilators 144 ist außerhalb des Behälters 145 am Deckel 149 angebracht. Sie wirkt über eine Magnetkupplung 152. Die an der Ventilatorwelle 153 befestigte Hälfte der Magnetkupplung 152 sitzt innerhalb einer gasdichten Kapsel 154, die am Behälterdeckel 149 angeflanscht ist, um so Leckagen nach außen über die Ventilatorwelle 153 zu vermeiden.

**Patentansprüche**

1. Adsorptionseinrichtung zur Gastrennung mit einem Adsorbens, vorzugsweise Aktivkohle, zwecks Adsorption von insbesondere radioaktivem Krypton und/oder Xenon, wobei das Adsorbens enthaltende Rohre (12) in einem wärmeisolierten Behälter (2) vertikal verlaufend angeordnet und mit einer benachbarten Heizeinrichtung (14) und mit einem Kühlmittel versehen sind,
   **dadurch gekennzeichnet, daß** das Kühlmittel in einer Rohranordnung (13) enthalten ist, die sich neben den Adsorberrohren (12) über annähernd deren ganze Länge erstreckt, und daß in dem Behälter (2) eine Gasumwälzeinrichtung (36) angeordnet ist, deren Gasstrom die Heizeinrichtung (14), die Kühlrohre (13) und die gesamte Länge der Adsorberrohre (12) erfaßt.

2. Adsorptionseinrichtung nach Anspruch 1,
   **dadurch gekennzeichnet, daß** der von der Gasumwälzeinrichtung (36) ausgehende Gasstrom erst die Adsorberrohre (12) und dann die Heizeinrichtung (14) und/oder die Kühlrohre (13) bestreicht.

3. Adsorptionseinrichtung nach Anspruch 1 oder 2,
   **dadurch gekennzeichnet, daß** die Adsorberrohre (12) einen rechteckigen Querschnitt haben, dessen Längsrichtung in der Richtung des Gasstromes liegt.

4. Adsorptionseinrichtung nach Anspruch 1, 2 oder 3,
   **dadurch gekennzeichnet, daß** die Gasumwälzrate 100 h$^{-1}$ oder mehr beträgt.

5. Adsorptionseinrichtung nach einem der Ansprüche 1 bis 4,
   **dadurch gekennzeichnet, daß** die Adsorberrohre ein Rohrbündel (12) mit Kreisringquerschnitt bilden, daß konzentrisch zu dem Rohrbündel (12) eine zylindrische Rohrschlange (13) angeordnet ist, die das Kühlmittel führt, und daß im Zentrum des Rohrbündels (12) und/oder der Rohrschlange (13) eine an sich bekannte elektrische Heizeinrichtung (14) angeordnet ist.

6. Adsorptionseinrichtung nach Anspruch 5,
   **dadurch gekennzeichnet, daß** das Rohrbündel (12) in horizontaler Anströmung mit Umwälzgas beaufschlagt ist, wobei der Druckverlust über das Rohrbündel (12) mindestens doppelt so hoch, vorzugsweise 10 mal so hoch wie der Druckverlust des restlichen Gasumwälzweges ist.

7. Adsorptionseinrichtung nach Anspruch 6,
   **dadurch gekennzeichnet, daß** sich die Heizeinrichtung (14) nur über einen Teil der Höhe von Rohrbündel (12) und Rohrschlange (13) erstreckt und daß in dem restlichen Raum (35) ein Ventilator (36) angeordnet ist.

8. Adsorptionseinrichtung nach Anspruch 7,
   **dadurch gekennzeichnet, daß** der Ventilator (36) direkt über dem Rohrbündel (12) in einem Behälterdeckel (6) angeordnet ist.

9. Adsorptionseinrichtung nach Anspruch 7 oder 8,
   **dadurch gekennzeichnet, daß** der Antriebsmotor (40) des Ventilators (36) außerhalb des Behälters (2) angeordnet ist.

10. Adsorptionseinrichtung nach Anspruch 9, **dadurch gekennzeichnet, daß** der Antriebsmotor (40) mit einer gasdichten Kapsel (41) umgeben ist, die an dem Behälter (2) angeflanscht ist.

11. Adsorptionseinrichtung nach Anspruch 10,
    **dadurch gekennzeichnet, daß** die Kapsel (41) doppelwandig und mit einem Zwischenraum ausgeführt ist, in dem ein Kühlmittel zirkuliert.

12. Adsorptionseinrichtung nach Anspruch 9 oder 10,
    **dadurch gekennzeichnet, daß** zwischen dem Antriebsmotor (40) und dem Ventilator (36) eine Magnetkupplung angeordnet ist, die über die Ventilatorwelle (39) einschließende, am Behälter (2) angeflanschte Kapsel wirkt.

13. Adsorptionseinrichtung nach einem der Ansprüche 1 bis 12, **dadurch gekennzeichnet, daß** Rohrbündel (12), Rohrschlange (13) und Heizeinrichtung (14) miteinander verbunden und als Einheit (11) in den Behälter (2) eingehängt sind.

14. Adsorptionseinrichtung nach Anspruch 13,
    **dadurch gekennzeichnet, daß** die Einheit (11) an Ankern (10) hängt, die in den Innenraum (8) des Behälters (2) ragen.

15. Adsorptionseinrichtung nach Anspruch 14, **dadurch gekennzeichnet, daß** die Einheit (11) über Zu-und Abführleitungen (46, 47, 50, 51) am Deckel (6) aufgehängt ist.

**16.** Adsorptionseinrichtung nach einem der Ansprüche 1 bis 15, **dadurch gekennzeichnet,** daß der Behälterinnenraum (8) mit einem außerhalb des Behälters (2) angeordneten Druckausgleichsraum verbunden ist.

**17.** Anlage (55,90) mit zwei parallelen Zweigen (56,57,91,92), die je eine Absorptionseinrichtung nach einem der Ansprüche 1 bis 13 umfassen, **dadurch gekennzeichnet,** daß eine Adsorptionseinrichtung (66,97) als Adsorber arbeitet, während die andere (66',97') regeneriert wird.

**18.** Anlage (55,90) nach Anspruch 17, **dadurch gekennzeichnet,** daß zwischen den Adsorbern (66, 66', 97, 97') der parallelen Zweige (56, 57, 91, 92) ein Wärmeaustauschkreis (70) vorgesehen ist.

**Claims**

**1.** Adsorption device for gas separation with an adsorbent, preferably active carbon, for the purpose of adsorption of in particular radioactive krypton and/or xenon, with tubes (12) containing the adsorbent being arranged to extend vertically in a thermally insulated container (2) and being provided with an adjacent heating device (14) and a coolant, characterised in that the coolant is contained in a tube arrangement (13) which extends near the adsorber tubes (12) over approximately their entire length, and in that in the container (2) there is arranged a gas circulation device (36), the gas flow of which passes along the heating device (14), the cooling tubes (13) and the entire length of the adsorber tubes (12).

**2.** Adsorption device according to claim 1, characterised in that the gas flow from the gas circulation device (36) is directed first of all past the adsorber tubes (12) and then the heating device (14) and/or the cooling tubes (13).

**3.** Adsorption device according to claim 1 or 2, characterised in that the adsorber tubes (12) have a rectangular cross-section whose longitudinal direction lies in the direction of the gas flow.

**4.** Adsorption device according to claim 1, 2 or 3, characterised in that the gas circulation rate is 100 h$^{-1}$ or more.

**5.** Adsorption device according to one of claims 1 to 4, characterised in that the adsorber tubes form a tube bundle (12) with a circular ring cross-section, in that arranged concentrically to the tube bundle (12) is a cylindrical tube coil (13) which conveys the coolant, and in that in the centre of the tube bundle (12) and/or the tube coil (13) there is arranged an electrical heating device (14) known per se.

**6.** Adsorption device according to claim 5, characterised in that circulating gas is directed onto the tube bundle (12) in a horizontal flow direction, the pressure loss over the tube bundle (12) being at least twice as high, preferably 10 times as high, as the pressure loss in the rest of the gas circulation path.

**7.** Adsorption device according to claim 6, characterised in that the heating device (14) extends only over a portion of the height of the tube bundle (12) and the tube coil (13) and in that a ventilator (36) is arranged in the remaining space (35).

**8.** Adsorption device according to claim 7, characterised in that the ventilator (36) is arranged directly above the tube bundle (12) in a container cap (6).

**9.** Adsorption device according to claim 7 or 8, characterised in that the drive motor (40) of the ventilator (36) is arranged outside the container (2).

**10.** Adsorption device according to claim 9, characterised in that the drive motor (40) is surrounded by a gas-tight capsule (41) which is flanged to the container (2).

**11.** Adsorption device according to claim 10, characterised in that the capsule (41) is double-walled and is provided with an intermediate space in which a coolant circulates.

**12.** Adsorption device according to claim 9 or 10, characterised in that between the drive motor (40) and the ventilator (36) there is arranged a magnetic coupling which works by means of a capsule flanged to the container (2) and surrounding the ventilator shaft (39).

**13.** Adsorption device according to one of claims 1 to 12, characterised in that the tube bundle (12), the tube coil (13) and the heating device (14) are joined together and are suspended into the container (2) as a unit (11).

**14.** Adsorption device according to claim 13, characterised in that the unit (11) is suspended on anchors (10) which project into the interior (8) of the container (2).

15. Adsorption device according to claim 14, characterised in that the unit (11) is suspended on the cap (6) by means of inflow and outflow lines (46, 47, 50, 51).

16. Adsorption device according to one of claims 1 to 15, characterised in that the interior (8) of the container is connected to a pressure-equalising chamber arranged outside the container (2).

17. Apparatus (55,90) having two parallel branches (56, 57, 91, 92) which each incorporate an adsorption device in accordance with one of claims 1 to 13, characterised in that one adsorption device (66, 97) functions as an adsorber while the other (66', 97') is regenerated.

18. Apparatus (55, 90) according to claim 17, characterised in that a heat exchange circuit (70) is provided between the adsorbers (66, 66', 97. 97') of the parallel branches (56, 57, 91, 92).

**Revendications**

1. Dispositif d'adsorption pour la séparation de gaz, comprenant un adsorbant, de préférence du charbon actif, destiné à adsorber du crypton et/ou du xénon, notamment radioactifs, des tubes (12) contenant l'adsorbant étant disposés dans une cuve (2) calorifugée, s'étendant verticalement et étant munis d'un dispositif de chauffage (14) voisin, et d'un fluide de refroidissement,
caractérisé en ce que le fluide de refroidissement est contenu dans un agencement tubulaire (13), qui s'étend à côté des tubes de l'adsorbeur (12) sur à peu près toute leur longueur, et en ce que dans la cuve (2) est prévu un dispositif de recirculation des gaz (36), dont le courant de gazeux embrasse le dispositif de chauffage (14), les tubes de refroidissement (13) et toute la longueur des tubes de l'adsorbeur (12).

2. Dispositif d'adsorption suivant la revendication 1,
caractérisé en ce que le courant gazeux issu du dispositif de recirculation des gaz (36) balaye d'abord les tubes de l'adsorbeur (12), puis le dispositif de chauffage (14) et/ou les tubes de refroidissement (13).

3. Dispositif d'adsorption suivant la revendication 1 ou 2,
caractérisé en ce que les tubes de l'adsorbeur (12) ont une section transversale rectangulaire, dont la direction de la longueur est dans le sens du courant de gaz.

4. Dispositif d'adsorption suivant la revendication 1, 2 ou 3,
caractérisé en ce que la vitesse de recirculation des gaz est de 100 h$^{-1}$ ou est supérieure à cette valeur.

5. Dispositif d'adsorption suivant l'une des revendications 1 à 4,
caractérisé en ce que les tubes de l'adsorbeur forment un faisceau tubulaire (12) à section transversale en forme d'anneau de cercle, en ce que concentriquement au faisceau tubulaire (12) est disposé un serpentin (13) cylindrique qui conduit le fluide de refroidissement et en ce qu'au centre du faisceau tubulaire (12) et/ou du serpentin (13), est prévu un dispositif électrique de chauffage (14) en soi connu.

6. Dispositif d'adsorption suivant la revendication 5,
caractérisé en ce que le faisceau tubulaire (12) est alimenté suivant une arrivée horizontale en gaz de recirculation, la perte de charge sur le faisceau tubulaire (12) étant au moins deux fois et de préférence, dix fois plus grande que la perte de charge dans le reste du trajet de recirculation des gaz.

7. Dispositif d'adsorption suivant la revendication 6,
caractérisé en ce que le dispositif de chauffage (14) ne s'étend que sur une partie de la hauteur du faisceau tubulaire (12) et du serpentin (13) et en ce qu'un ventilateur (36) est disposé dans l'espace (35) restant.

8. Dispositif d'adsorption suivant la revendication 7,
caractérisé en ce que le ventilateur (36) est disposé directement au-dessus du faisceau tubulaire (12) dans un couvercle de cuve (6).

9. Dispositif d'adsorption suivant la revendication 7 ou 8,
caractérisé en ce que le moteur d'entraînement (40) du ventilateur (36) est disposé en dehors de la cuve (2).

10. Dispositif d'adsorption suivant la revendication 9, caractérisé en ce que le moteur d'entraînement (40) est entouré d'une capsule (41) qui est étanche au gaz et qui est bridée sur la cuve (2).

11. Dispositif d'adsorption suivant la revendication 10,
caractérisé en ce que la capsule (41) est à double paroi et comporte un espace intermédiaire dans lequel circule un fluide de refroidissement.

12. Dispositif d'adsorption suivant la revendication 9 ou 10,
caractérisé en ce que, entre le moteur d'entraînement (10) et le ventilateur (36), est prévu un accouplement magnétique, qui agit sur la capsule entourant l'arbre du ventilateur (39) et qui est bridée sur la cuve (2).

13. Dispositif d'adsorption suivant l'une des revendications 1 à 12,
caractérisé en ce que le faisceau tubulaire (12), le serpentin (13) et le dispositif de chauffage (14) sont reliés ensemble et sont suspendus sous la forme d'une unité (11) dans la cuve (2).

14. Dispositif d'adsorption suivant la revendication 13,
caractérisé en ce que l'unité (11) est suspendue à des barres de suspension (10), qui font saillie à l'intérieur (8) de la cuve (2).

15. Dispositif d'adsorption suivant la revendication 14, caractérisé en ce que l'unité (11) est suspendue au couvercle (6) par des conduits d'entrée et de sortie (46,47,50,51).

16. Dispositif d'adsorption suivant l'une des revendications 1 à 15,
caractérisé en ce que l'intérieur (8) de la cuve communique avec une chambre d'égalisation de la pression, disposée à l'extérieur de la cuve (2).

17. Installation (55,90) comprenant deux branches (56,57,91,92) parallèles, qui comportent chacune un dispositif d'adsorption suivant l'une des revendications 1 à 13, caractérisée en ce qu'un dispositif d'adsorption (66,97) opère en adsorbeur, tandis que l'autre (66' ,97') est régénéré.

18. Installation (55,90) suivant la revendication 17, caractérisée en ce qu'il est prévu, entre les adsorbeurs (66,66',97,97') des branches (56,57,91,92) parallèles, un circuit d'échange de chaleur (70).

FIG 1

FIG 2

FIG 3

FIG 4

FIG 6

FIG 5